# EUROPEAN PATENT APPLICATION

(11) **EP 4 414 416 A1**
(43) Date of publication of application: **14.08.2024**
(21) Application number: 23156322.2
(22) Date of filing: 13.02.2023
(51) Int. Cl.: C08J 11/08

(54) **METHOD FOR PURIFICATION OF A POLYMER MATERIAL FROM POLYMER WASTE AND PURIFIED POLYMER MATERIAL**

(71) Applicant: APK AG, 06217 Merseburg (DE)
(72) Inventor: HANEL, Hagen, 06217 Merseburg (DE); BUNDT, Marlen, 06217 Merseburg (DE); MISSLER, Christian, 06217 Merseburg (DE); KLOEPFEL, Karin, 06217 Merseburg (DE); VONDRAN, Markus, 06217 Merseburg (DE); FEHSE, Julian, 06217 Merseburg (DE)
(74) Representative: Kilger, Ute

(57) **Abstract**

The present invention relates to a method for purification of a polymer material from plastic waste, wherein said polymer material comprises at least one target polymer, at least one non-target polymer and at least one impurity, wherein the method comprises the steps of providing said plastic waste in solid form; dissolving said polymer material; optionally, a first liquid-solid separation step; optionally, adding at least one additive; precipitating the at least one impurity and the at least one non-target polymer from the solution; optionally, adding at least one additive; separating the precipitate; optionally, adding at least one additive and separating the at least one additive and adsorbed remaining impurities; removing the residual solvent and, optionally degassing the purified target polymer material. The present invention further relates to a recyclate obtainable by said method.

## Description

### Technical Field

Subject-matter of the present invention is a method for purification of a polymer material, comprising at least one target polymer, at least one non-target polymer and at least one impurity from post-consumer (PC) or post-industrial (PI) polymer waste material.

The present invention also relates to the recyclate which is obtainable by said method.

### Background of the Invention

It is well known that plastic has a huge impact on the environment largely because it is in general not biodegradable. Each year several million tons of plastic objects, such as plastic bags, pellets and plastic bottles, end up in the oceans and accumulate over time. Said plastic objects decompose very slowly and eventually form microplastics representing a huge environmental problem. Toxins such as DDT and BPA have been found to adhere to microplastics and aggravate said problem. Also, onshore polymer waste can be found even in remote regions. Polymer waste, in particular microplastics, represents a danger to animal life and potentially to humans when meat or fish is consumed.

Plastic recycling offers a sustainable way of reducing the amount of polymer waste that is effectively produced and released into the environment. For this purpose, various mechanisms of recycling polymer waste have been developed over time.

Moreover, exemplary a 100 % recycled PP granule is sold at about 70 % of the price of a virgin "natural color" PP granule. Since in Europe, existing PP recyclers produce around 1000 kt/year of PP, finding a way to decolorize PP would lead to an important added-value.

A colored plastic material that is to be recycled typically is washed, flaked or pelletized, and then supplied to a solid-state reactor in the process of converting waste plastic into various articles. Therefore, the recycling of plastic materials from post-consumer or post-industrial residues is highly desirable and is focused in the state of the art.

DE4033604A1 relates to the recovery of soluble plastics from waste, wherein the plastic to be recovered is selectively dissolved out of the plastic-containing waste by suitable solvents. The thus obtained solution is injected into a container filled with a medium which is a non-solvent for the plastic. The temperature of this medium must in this case be above the boiling point of the solvent in which the plastic was dissolved. As a result, the solvent evaporates and the plastic to be recovered is released. The evaporated solvent is recovered. The precipitation of the plastic shall be quantitative in that one injects the plastic solution in a very high excess of a non-solvent for this plastic.

Also, EP3362507B1 discloses a method for decolorization of a polyolefin material by utilizing specific solvents, in particular isoparaffinic solvents, which prevent the molecular chains of the polyolefins from destruction and, by adding one or more decolorizing additives selected from bleaching agents, filter aids and mixtures thereof with a subsequent hot liquid-solid separation step.

Other methods use additives to improve liquid solid separations after solubilization of the polymer. For example, US6169121B1 provides a method for recycling a styrene resin including removing insoluble components in a solution resulting from dissolution of a styrene resin in an organic solvent by contacting an adsorbent with said solution, subsequently removing the organic solvent from the solution freed of the insoluble components such as moisture, or the colorant, and recycling the resulting mass as a regenerated styrene resin. Said adsorbent may be clay which can be charged in a metal mesh column through which the solution is passed. Before passing through the column, the solution is heated, preferably to not lower than 40 °C and to not higher than 100 °C.

DE4009308A1 claims a method for cleaning a polymer solution, wherein said solution is passed through a sand bed under pressure or not, the non-soluble impurities being retained in said bed. Said sand bed may contain coagulation agents like clays. The polymers are those which are dissolved without modification of the chemical bounds, in particular thermoplastic aromatic polycarbonates, polyacrylates or polystyrene.

WO2017064292A1 discloses a method for removing heavy metals from plastic material, for example polyolefins, in particular PE, said method comprising dissolving the plastic material in an isoparaffinic solvent to obtain a solution having a polymer concentration below 20 % weight per total weight (wt%) and hot filtering said solution by a cellulose filter with a porosity between 1 and 25 µm. Since heavy metals, which are used as pigments, are thereby separated from the polymer, this method leads to a decolorized polymer.

EP0644230A1 discloses a method for reprocessing or reclaiming polyolefins and polyolefin-containing composite materials, by treatment with a solvent selected from cycloalkanes, linear alkanes, isoalkanes and mixtures thereof in the presence of a surfactant. Said method leads to higher quality polyolefins and, in addition the method can be carried out more economically and in a more environmentally friendly manner.

Disadvantageous from the state of the art is that recycling of colored post-consumer or post-industrial polymer waste material according to the state of the art leads to a yellowish to grayish recyclate. Impurities cannot properly be separated from the target polymer and remain in the product, leading to an impure appearance, which dampens the application area and thus the interest in such products. Hence, such recycled granules must be compounded with virgin material to a point at which a nearly clean colored batch might be obtained in order to be able to be sold as "decolorized", which renders such recyclates improper regarding circular economy. As a consequence, to approach closed-loop economy via recycling management there is a strong need to remove the coloration from many types of post-consumer or post-industrial polymer waste material, in particular from polymer plastic material.

In that context attempts have been made to remove color from colored plastic material. Most known from the state of the art is the usage of a solvent, followed by adding a non-solvent to precipitate the polymer again after a liquid solid separation. Exemplarily, FR2906809A1 discloses a process for the purification of a polymer, in particular polyethylene (PE) or polypropylene (PP), said process comprising adding to a homogeneous medium containing said polymer, a nonsolvent/antisolvent of said polymer to make the medium heterogeneous and trigger a precipitation with a subsequent recovery the polymer particles from said heterogeneous medium.

Regarding the present invention it has been found that by using a combination of dissolution of the input polymer with a subsequent precipitation step, which is carried out at a temperature, which is below the cloud point of a non-target polymer and above the cloud point of a target polymer the inventors are able to provide a PC or PI polymer waste material purification method, with which impurities bound in the polymer matrix might be removed exceptionally fast and energy saving together with the non-target polymer and, which leads to a purified material with a surprisingly low amount of residual impurities. The inventors also discovered, that the additional application of impurity binding additives significantly reduces the amount of remaining metallic inorganic pigments in the purified polymer intermediate recyclate, contributing to a colored appearance and also reduces the amount of odor-causing components. With said method it is possible to obtain purified post-customer or post-industrial polymer recyclate materials with physical features, close to virgin ones.

### Definitions

Listed below are definitions of various terms used to describe this invention. These definitions apply to the terms as they are used throughout this specification and claims unless otherwise limited in specific instances either individually or as part of a larger group. Unless defined otherwise all technical and scientific terms used herein generally have the same meaning as commonly understood by one of ordinary skill in the art to which this invention belongs.

As used herein the articles "a" and "an" refer to one or to more than one (i.e., to at least one) of the grammatical object of the article. By way of example, "an element" means at least one element, i.e., an element or more than one element. This applies, in particular, also for "a target polymer" and "a solvent" as discussed below.

As used herein the term "average temperature" refers to a temperature that is averaged over time, preferably over the duration of the corresponding step. In a continuous system the duration of a step refers to the average time of the waste material under the conditions as described for said step. There may be location dependent variations within the solvent that can be reduced by stirring. In said case the temperature should also be averaged over said locations to determine the average temperature. With sufficient stirring the average temperature usually is only location dependent to a small degree and the average temperature can be determined by measuring in one spot for the duration of a step.

As used herein the term "film" refers to a thin layered material that is usually used for wrapping and packaging and that is usually produced from polymeric material in context of this application. The term is therefore understood as a synonym to the term "foil".

As used herein the term "solvent" refers to a single solvent or a mixture of different solvents. A single solvent may facilitate recovery whereas a mixture may reduce the use of toxic solvents or accelerate dissolution of a polymer.

As used herein the term "detergent" refers to a water soluble agent, which combines water with impurities and, therefore raises the water solubility from water repellent and water insoluble (hydrophobic) impurities comprising amphoteric surfactants such as cocoamidopropyl-betaine, sulfobetaine, amphoacetate, disodium cocoamphodiacetate; cationic surfactants such as distearyl dimethyl ammonium chloride or esterquats; anionic tensides such as alkyl carboxylates, alkyl benzosulfonates, secondary alkyl sulfonates, fatty alcohol sulfates, alkyl ethersulfates, sulfo acetates or taurides; and non-ionic surfactants such as polyalkylene glycol ether, fatty alcohol propoxylates, alkyl glucosides or sodium lauryl sulfate.

As used herein the terms "target polymer" and "non-target polymer" each refer to a single polymer. Polymers also include copolymers and block polymers. Preferably the terms "target polymer" and "non-target polymer" each refer to a single polymer that is dissolvable in a solvent and may be used for producing polymer pellets.

The main difference between target and non-target polymer within the scope of this invention lies in the cloud point, depicting the temperature at which precipitation of a dissolved or suspended polymer occurs during the cooling of the respective polymer solution or suspension subsequent to the dissolution of the respective polymer in a specific solvent at the distinct dissolution temperature. The non-target polymer always comprises a higher cloud point, meaning the precipitation starts at a higher temperature in comparison to that cloud point of the target polymer. The start of precipitation is detected by decrease of the particles with the size of 1 - 100 µm and increase of the particles with the size of 100 - 1000 µm as measured by "focused beam reflectance measurement" (FBRM). Preferably, the cloud point of the non-target polymer in a solvent or a mixture of solvents is at least 2 K higher, preferably at least 5 K higher, more preferably at least 10 K higher, even more preferably at least 15 K higher than that cloud point of the target polymer in said solvent or mixture of solvents.

As used herein the term "polymer waste" refers to waste comprising plastic materials made from polymers. Preferably polymer waste is any substance that is discarded after primary use or during industrial processes such as production steps, and/or has been discarded, e.g., because it is defective. In some embodiments the "polymer waste" is solid. In some embodiments "polymer waste" refers to municipal solid waste, in particular comprising everyday items that are discarded by the public. In some embodiments "polymer waste" refers to post-consumer use polymers, post-industrial use polymers or combinations thereof.

As used herein the term "post-consumer (PC)" waste material refers to plastic materials from consumer origin, that individuals routinely discard, either in a waste receptacle or a dump, or by littering. PC waste material is commonly not classified in size and might be adjusted accordingly and normally is polluted or contaminated and hence washing and other pre-treatment steps are required.

Post-consumer waste is distinguished from pre-consumer waste, which is the reintroduction of manufacturing scrap (such as trimmings from paper production, defective aluminum cans, etc.) back into the manufacturing process. Therefore, pre-consumer waste is herein considered post-industrial waste.

As used herein the term "post-industrial (PI)" waste material refers to plastic materials from industrial origin, that is separated from the waste stream in the manufacturing process. However, it also refers to products that have not been used for their intended purpose. PI waste material is commonly not classified in size and might be adjusted accordingly but is commonly not polluted or contaminated.

As used herein the term "pre-treated polymer waste" or "pre-treated polymeric input material" refers to a polymer waste from PC or PI origin which has been treated by means of sorting, washing, downsizing and/or dedusting said polymer waste.

As used herein the term "impurity" is a substance incorporated inside the complex polymer chain agglomeration, herein referred to as "matrix", or adhered at the surface of the polymer material, which is essentially insoluble in the respective solvent or mixture of solvents at the applied dissolution temperature, but is dispersed when the polymer material is dissolved or dispersed. Preferably said impurities are selected from coloring agents such as pigments or dyes, bonding agents, adhesives, degraded polymer chains, processing aids, thermostabilizers such as sterically hindered phenols, phosphites, and hydroxylamines, in particular pentaerythritol tetrakis(3,5-di-tert-butyl-4-hydroxyhydrocinnamate) or tris(2,4-di-tert-butylphenyl)phosphite, UV-stabilizer, metal deactivators, anti-slipping agents, anti-blocking agents, nucleating agents, acid scavenger, fillers, light stabilizers such as triazines, benzotriazoles or hindered amines, flame retardants, antioxidants, antistatic agents such as disubstituted aliphatic amines, trisubstituted aliphatic amines or quaternary aliphatic ammonium salts, lubricants such as higher alkanes and saturated fatty acids, non-branched hydrocarbons comprising from 20 to 40 carbon atoms, saturated fatty acids, represented by the formula CH₃(CH₂)ₙCOOH, wherein n is an integer from 10 to 20, slipping agents such as amides of fatty acids, in particular or oleamide, biocides or non-soluble solid material, selected from the group comprising non-target polymers such as but not limited to PP, HDPE, PET, PA, PVC as well as metals, metal layers, paper, pigments, fillers, fibers, waxes or insoluble impurities.

As used herein the term "downsizing" refers to shredding, cutting, slicing, ripping, shaving, tearing, slashing, carving, cleaving, dissevering, hacking, incising, severing, shearing, fragmenting, fraying, lacerating and grinding of said plastic material.

As used herein the term "particulate matter" refers to the dust released by downsizing said polymer waste, in particular by shredding of said plastic material. Said particulate matter comprises the particles with the particle size < 300 µm, in particular the particles with the particle size < 100 µm. The wording "particulate matter" as used herein is synonymous with the wording "dust" and is used interchangeably. The wording "essentially free of particulate matter" is synonymous with the "dust-free" and is used interchangeably.

As used herein the term "essentially soluble" or "soluble" with respect to the target polymer refers to the solubility of said target polymer in the solvent or said mixture of solvents in an amount not less than 5 wt%, more preferably not less than 7 wt%, in particular not less than 10 wt%, with respect to the total weight of the solvent or mixture of solvents and the of polymer that is dissolved.

As used herein the term "essentially insoluble" or "essentially non-soluble" with respect to the at least one additive refers to the solubility of said additive in the solvent or said mixture of solvents an amount of less than 1 wt%, preferably less than 0.5 wt%, in particular less than 0.1 wt%, with respect to the total weight of the solvent or mixture of solvents and the of polymer that is dissolved.

As used herein the term "thermostabilizers" refers to agents that are used to reduce the degrading effects of heat generated during processing of polymeric materials under severe conditions such as shearing, processing at higher temperatures or oxidation. Non-limiting examples of thermal stabilizers include sterically hindered phenols, phosphites, and hydroxylamines, in particular pentaerythritol tetrakis (3,5-di-tert-butyl-4-hydroxyhydro-cinnamate) and tris (2,4-di-tert-butyl-phenyl) phosphite.

As used herein the term "light stabilizers" refers to agents that are used to reduce the degrading effects caused by exposure of polymeric materials to visible irradiation or UV-irradiation. Non-limiting examples of light stabilizers include triazines, benzotriazoles and hindered amines.

As used herein the term "flame retardants" refers to agents that are used to prevent or slow down flammability of polymeric materials.

As used herein the term "antistatic agents" refers to compounds which are used to reduce or eliminate buildup of static electricity of polymeric materials or their surfaces. Non-limiting examples of antistatic agents include disubstituted aliphatic amines, trisubstituted aliphatic amines or quaternary aliphatic ammonium salts.

As used herein the term "lubricants" refers to agents that are used to reduce friction between surfaces while processing polymeric materials. Non-limiting examples of lubricants comprise higher alkanes and saturated fatty acids. In particular, higher alkanes are non-branched hydrocarbons comprising from 20 to 40 carbon atoms. In particular, saturated fatty acids are represented by the formula CH₃(CH₂)ₙCOOH, wherein n is an integer from 10 to 20.

As used herein the term "slip agents" refers to agents that are used to reduce film's resistance to sliding over itself or parts of converting equipment. Non-limiting examples of slip agents include amides of fatty acids, in particular, oleamide.

As used herein the term "biocides" refers to agent which are used to kill or reduce the number of microorganisms and protect polymeric materials from infestation.

As used herein the term, "pigments" comprise all types of particulate compounds and compounds dispersed in the polymeric material matrix used to give a color to a plastic material as for example organic or inorganic pigments.

As used herein the term, "dyes" comprise all types of compounds adhered to the surface of polymeric materials used to give a color to a plastic material such as but not limited to lacquer, prints or inking.

As used herein the term "additive" refers to a substance in powdery form, which is essentially insoluble in said solvent or mixture of solvents and is characterized by an inner specific surface area in the range of from 120 to 2000 m²/g, preferably from 150 to 1500 m²/g, more preferably from 200 to 1500 m²/g, even more preferably from 250 to 1500 m²/g, most preferred from 250 to 1000 m²/g. Preferably, said additive is used as an adsorbent which is capable of absorbing impurities from a solution comprising the at least one target polymer. Preferably, said additive is selected from the group comprising bleaching earths, fuller's earth, molecular sieves, zeolites, celite, perlites, quartz sand, activated carbon, silica gel, calcium sulfate hemihydrate, thermostabilizers or mixtures thereof.

As used herein the term "Bleaching earths" relates to activated earths that are obtained by an acid activation process to confer them specific properties. Said bleaching earths are solid compositions comprising one major compound, herein as the usual meaning of a compound representing 50 wt% or more, , of the solid composition und may be comprised of silicon oxide (SiOz) as major compound and/or aluminum oxide (Al₂O₃) or magnesium oxide (MgO), and optionally, one or more oxides selected from iron III oxide (Fe₂O₃), calcium oxide (CaO), Sodium Oxide (Na₂O), Boron oxide (BO, B₂O, B₂O₃) and potassium oxide (K₂O), or mixtures thereof. Bleaching earths are particularly advantageous because of these essential properties (adsorptive capacity, acid properties, catalytic properties, ion exchange capacity and particle size distribution) which make them usable not only as adsorbent but also as filtration aid.

A solid composition according to the present invention is typically in a powdery form, or in the form of granules.

As used herein the term "linear alkanes" refers to straight chain hydrocarbons having from 5 to 20 carbon atoms, typically from 5 to 12 carbon atoms. Examples include, but not limited to n-hexane, n-heptane, n-octane and n-nonane.

As used herein the term "iso-alkanes" or "branched alkanes" refers to branched chain hydrocarbons having from 5 to 20 carbon atoms, typically from 5 to 12 carbon atoms. Examples include, but not limited to isooctane.

As used herein the term "cyclic alkanes" refers to cyclic, saturated hydrocarbons wherein each of the atoms forming the ring (i.e., skeletal atoms) is a carbon atom. Cyclic alkanes may be optionally substituted by an alkyl group having from 1 to 4 carbon atoms. Examples include, but are not limited to cyclohexane or methylcyclohexane.

As used herein the term "ketones" refers to organic compounds having a carbonyl group linked to a carbon atom. Examples include, but are not limited to acetone or butanone.

As used herein the term "ester" refers to organic compounds having a functional group of formula - C(=O)OR, wherein R represents an alkyl group. Examples include, but are not limited to ethyl acetate or benzylacetate.

In the context of the present application, the term "separation rate" relates to the percentage of an amount of a material, which is incorporated in the matrix of a material mixture or adhered at the surface and which is separated from this material mixture in relation to the initial total amount of that material in the matrix of the material mixture or adhered at the surface.

The "average molecular weight" is preferably the total weight of the respective polymer sample, e.g., the target polymer, divided by the number of polymer molecules in the sample. The "average molecular weight" may be determined according to ISO 16014-1:2012 and/or ISO 16014-2:2012, preferably by ISO 16014-1:2012.

Size classification in context of this document refers to the sorting of material objects according to their size, wherein size is defined by dimensional parameters comprising average or non-average object diameter, radius, length, width and/or depth, or a combination thereof, or any other geometric measure that defines the object by its physical appearance. Size may also be expressed by parameters comprising density and/or shape, or a combination thereof.

Further, within the context of the present invention the size of the plastic material may be defined by operation of the size classification unit on the downsized or shredded plastic material, wherein the size classification unit classifies the downsized or shredded plastic material into different size groups.

Size classification that is subject matter of the present invention refers to the use of any size classification unit, or a size classifier known in the prior art, comprising air classification units or air classifiers, sieves.

### Detailed Description of the Invention

In a first aspect, the subject-matter of the present invention relates to a method for purification of a polymer material from plastic waste wherein said polymer material comprises at least one target polymer, at least one non-target polymer and at least one impurity incorporated in the matrix or adhered at the surface of said polymer material, wherein the method comprises the steps of
a. providing said plastic waste in solid form;
b. optionally mechanically pre-treating said plastic waste by
   i. downsizing said plastic waste and classification of the particle sizes, and/or
   ii. washing said plastic waste in an aqueous solution, optionally comprising a detergent and/or NaOH, and
   iii. optionally drying the plastic waste obtained from step b.ii to remove excess water;
c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d. optionally, separating non-soluble solid materials from the suspension comprising the at least one target polymer, the at least one non-target polymer and the at least one impurity obtained in step c in a first liquid-solid separation step;
e. optionally, adding at least one additive to the solution or suspension comprising the at least one target polymer, the at least one non-target polymer and the at least one impurity, wherein said the at least one additive is essentially non-soluble in the at least one solvent or mixture of solvents;
f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents;
g. optionally, adding at least one additive to the suspension comprising the at least one target polymer obtained in step f, wherein said the at least one additive is essentially non-soluble in the at least one solvent or mixture of solvents;
h. separating the precipitate containing the at least one impurity, the at least one non-target polymer and optionally other non-soluble solid materials in a second liquid-solid separation step;
i. optionally, adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j. removing the residual solvent from the purified solution comprising the target polymer and,
k. optionally degassing the purified target polymer material.

In one embodiment, said polymer material comprises the at least one target polymer in an amount of at least 55 wt%, preferably at least 65 wt%, more preferably at least 75 wt%, most preferred at least 85 wt%.

In one embodiment, said polymer material comprises the at least one non-target polymer in an amount of at most 45 wt%, preferably at most 35 wt%, more preferably at most 25 wt%, most preferred at most 15 wt%.

In one embodiment, the cloud point of the at least one non-target polymer in said solvent or the mixture of solvents is at least 2 K higher, preferably at least 5 K higher, more preferably at least 10 K higher, even more preferably at least 15 K higher than that cloud point of the at least one target polymer in said solvent.

In one embodiment, the at least one target polymer selected from the group comprising polyethylene terephthalate (PET), polystyrene (PS), expanded polystyrene (EPS), ethylene-vinyl-alcohol (EVOH) styrene-acrylonitrile resin (SAN), acrylonitrile styrene acrylate (ASA), polyoxymethylene (POM), poly 1-butylene (PB), polybutylene terephthalate (PBT), acrylonitrile butadiene styrene (ABS), polyethylene (PE) such as linear low-density polyethylene (LLDPE), medium-density polyethylene (MDPE), high-density polyethylene (HDPE), ultra-high molecular weight polyethylene (UHMWPE), polypropylene (PP), biologically derived PE or PP, polyvinyl chloride (PVC), polyamide (PA) such as but not limited to PA6, PA6.10, PA6.12, PA6.66, PA 69, PA612, PA11, PA12, PA46, PA1212 or lactams, and polycarbonate (PCa). In one embodiment, said at least one target polymer is selected from the group polyethylene (PE), polypropylene (PP) and polyvinyl chloride (PVC), polyethylene terephthalate (PET) and polyamide (PA) such as PA6, PA6.10, PA6.12, PA6.66, PA 69, PA612, PA 11, PA12, PA46, PA1212 or lactams, or a mixture thereof. In one embodiment, said at least one target polymer is selected from the group polyethylene (PE), polypropylene (PP) and polyvinyl chloride (PVC) or a mixture thereof. In one embodiment, said at least one target polymer is selected from the group comprising low-density polyethylene (LLDPE), medium-density polyethylene (MDPE), high-density polyethylene (HDPE) and ultra-high molecular weight polyethylene (UHMWPE).

In one embodiment, the at least one non-target polymer selected from the group comprising polyethylene terephthalate (PET), polystyrene (PS), expanded polystyrene (EPS), ethylene-vinyl-alcohol (EVOH) styrene acrylonitrile resin (SAN), acrylonitrile styrene acrylate (ASA), polyoxymethylene (POM), poly 1-butylene (PB), polybutylene terephthalate (PBT), acrylonitrile butadiene styrene (ABS), polyethylene (PE) such as linear low-density polyethylene (LLDPE), medium-density polyethylene (MDPE), high-density polyethylene (HDPE), ultra-high molecular weight polyethylene (UHMWPE), polypropylene (PP), biologically derived PE or PP, polyvinyl chloride (PVC), polyamide (PA) such as but not limited to PA6, PA6.10, PA6.12, PA6.66, PA 69, PA612, PA 11, PA12, PA46, PA1212 or lactams, and polycarbonate (PCa). In one embodiment, said at least one target polymer is selected from the group polyethylene (PE), polypropylene (PP) and polyvinyl chloride (PVC), polyethylene terephthalate (PET) and polyamide (PA) such as PA6, PA6.10, PA6.12, PA6.66, PA 69, PA612, PA 11, PA12, PA46, PA1212 or lactams, or a mixture thereof. In one embodiment, said at least one non-target polymer is selected from the group polyethylene (PE), polypropylene (PP) and polyvinyl chloride (PVC) or a mixture thereof.

In one embodiment, the plastic waste material is both rigid and flexible plastic packing.

In one embodiment, the plastic waste material is either rigid or flexible plastic packing.

In one embodiment, the plastic waste material comprises predominantly construction materials.

In one embodiment, the polymer waste is only rigid packaging, comprising PS, PET, HDPE, and/or PP products, or polyamide that may be fiber-reinforced, or a combination thereof, particularly comprising plastic bottles that were used for storing food and non-food articles, e.g., fruit juice, milk, shampoo, soap, or cleaning agents.

In one embodiment, said plastic waste is selected from multilayer plastics comprising multilayer films, wherein said multilayer plastics comprise polyethylene (PE), preferably polyethylene and polyamides (PE and PA), preferably polyethylene (PE) and polyethylene terephthalate (PE and PET), or preferably polyethylene and polypropylene (PE and PP). In one embodiment, said multilayer plastics are selected from post-consumer or post-industrial waste, comprising polyolefins.

In one embodiment said multilayer post-consumer or post-industrial polymer waste material is selected from combinations of polymer/polymer, polymer/metal, polymer/metal/polymer such as polyethylene/aluminum/polyethylene terephthalate (PE/Al/PET), polyethylene/ polyethylene terephthalate (PE/PET), polyethylene/Aluminum (PE/PA), polyethylene/ polypropylene (PE/PP).

In some embodiments the at least one target polymer has an average molecular weight of 50 to 20.000 kDa, more preferably of 100 to 4.000 kDa, in particular preferably of 200 to 2.000 kDa.

One embodiment of the present invention relates to a method for purifying at least one target polymer from post-consumer or post-industrial polymer waste material from impurities, which are present in the post-consumer or post-industrial polymer waste material, selected from the group comprising but not limited to coloring agents such as pigments or dyes; bonding agents; adhesives; degraded polymer chains; processing aids; thermostabilizers such as sterically hindered phenols, phosphites, and hydroxylamines, in particular pentaerythritol tetrakis(3,5-di-tert-butyl-4-hydroxy-hydrocinnamate) or tris(2,4-di-tert-butylphenyl)phosphite; UV-stabilizers; metal deactivators; anti-slipping agents; anti-blocking agents; nucleating agents; acid scavengers; fillers; light stabilizers such as triazines, benzotriazoles or hindered amines; flame retardants; antioxidants; antistatic agents such as disubstituted aliphatic amines, trisubstituted aliphatic amines or quaternary aliphatic ammonium salts; lubricants such as higher alkanes and saturated fatty acids, non-branched hydrocarbons comprising from 20 to 40 carbon atoms, saturated fatty acids, represented by the formula CH₃(CH₂)ₙCOOH, wherein n is an integer from 10 to 20; slipping agents such as amides of fatty acids, in particular amides of oleic acid, biocides, metals, metal layers, paper, fillers, fibers, waxes and insoluble impurities.

In one embodiment, said at least one impurity is selected from the group comprising coloring agents, such as pigments or dyes, bonding agents, thermostabilizers, UV-stabilizers, acid scavengers, fillers, light stabilizers, flame retardants, antistatic agents, lubricants, slip agents, biocides or mixtures thereof. the pigments are selected from the group of organic and/or inorganic pigments.

In one embodiment, the pigments are selected from the group comprising TiO₂, carbon black/soot, colored inorganic pigments such as metal oxides, metal hydroxides and metal sulfides, azo pigments, mono-azo pigments, di-azo pigments, azo-lake pigments, polycyclic pigments, day glow fluorescent pigments and/or mixtures thereof, and the dyes are selected from carbonyl dyes, cyanine dyes, phthalocyanines, di-oxazines, and/or a mixture thereof.

In one embodiment the organic pigments are selected from the group comprising azo pigments, mono-azo pigments, di-azo pigments, azo-lake pigments, polycyclic pigments, phthalocyanines, di-oxazines, day glow fluorescent pigments and/or a mixture thereof.

In one embodiment, the inorganic pigments are selected from the group comprising TiO₂, carbon black/soot, colored inorganic pigments such as metal oxide, metal hydroxide and metal sulfide and/or a mixture thereof.

In some embodiments, the total amount of the thermal stabilizers in the polymer waste material ranges from 0.05 to 0.5 wt%, preferably from 0.05 to 0.2 wt%, most preferably from 0.1 to 0.2 wt% based on the mass of the polymer waste material.

In some embodiments, the total amount of the light stabilizers in the polymer waste material ranges from 0.05 to 2 wt%, preferably from 1 to 2 wt% based on the mass of the polymer waste material.

In some embodiments, the total amount of the lubricants in the polymer waste material ranges from 0.1 to 10 wt%, preferably from 1 to 5 wt% based on the mass of the polymer waste material.

In some embodiments, the total amount of the slip agents in the polymer waste material ranges from 0.05 to 0.2 wt%, preferably from 0.05 to 0.1 wt% based on the mass of the polymer waste material.

In some embodiments, the total amount of the antistatic agents in the polymer waste material ranges from 1 to 2 wt% based on the mass of the polymer waste material.

The plastic waste can be two-dimensional or three-dimensional polymer waste, wherein two-dimensional polymer waste comprises flexible packaging, such as plastic films that may be single-layer plastic films, or multilayer plastic films. Three-dimensional polymer waste comprises rigid packaging, wherein said rigid packaging is differentiated by wall thickness. In on embodiment, the wall thickness of rigid packaging is > 300 µm and the wall thickness of non-rigid or flexible packaging is ≤ 300 µm.

In one embodiment, the plastic waste is selected from the group comprising films, flakes and/or multilayer polymer waste, wherein the maximum layer thickness is between between 5 µm to 10 mm, preferably between 5 µm to 1 mm, more preferably between 5 µm to 500 µm, even more preferably between 50 µm to 500 µm, even more preferably between 50 µm to 250 µm, most preferably between 50 µm to 100 µm.

In another embodiment, the plastic waste is only flexible packaging, comprising PE/PA compound packaging, particularly PE/PA multilayer packaging. Said only flexible packaging may have been used for non-food or food packaging, e.g., cheese, meat, fish, or bakery product packaging.

Some of the steps to perform the method according to the disclosed invention may be optional and, in some embodiments such optional steps are not implemented.

In some embodiments the plastic waste is at least partially obtained from packaging materials and/or films. In some embodiments at least 40 wt%, more preferably at least 60 wt%, even more preferably at least 80 wt%, most preferably at least 90 wt% of the plastic waste consists of packaging materials such as but not limited to cans, cups, collapsible tubes, plastic bags, films and/or mixtures thereof.

In one embodiment, the downsizing of the plastic waste input material is performed by a downsizing device selected from shredders, such as but not limited to single-shaft shredder, dust-free size reduction system single-shaft shredder, cooled single-shaft shredder or grinders, chippers, granulators, hammer mills, shear shredders and all-purpose shredders.

In one embodiment, the downsized plastic waste input material maybe classified by weight, wherein higher weight correlates with higher size or higher density.

In another embodiment, the downsized plastic waste input material maybe classified by weight, wherein the downsized plastic material may not be removed by the classification unit due to high density and weight.

In one embodiment, the size classification of the plastic waste input material comprises adjustable airflow velocities if the classification unit is an air classification unit, or adjustable size cut-off sieves if the classification unit is a sieving unit. In another embodiment the size classification unit is a combined unit, comprising air classification units and sieving units.

In one embodiment, downsizing the plastic waste material comprises at least one step of grinding, chopping, shredding, cutting, slicing, ripping, shaving, tearing, slashing, carving, cleaving, severing, dissevering, hacking, incising, shearing, fragmenting, fraying, lacerating and/or otherwise adequate processing to form smaller particles prior to contacting the solvent of said plastic material to form flakes or granules.

In one embodiment the size reduction is performed by a downsizing device selected from shredders, such as but not limited to a single-shaft shredder, a cooled single-shaft shredder, single-wave shredders, dust-free single-shaft shredder, grinders, chippers, granulators, hammer mills, shear shredders and/or all-purpose shredders.

In one embodiment, the downsized plastic waste material maybe classified by weight. In another embodiment, the downsized plastic material maybe classified by weight, wherein higher weight correlates with higher size. In yet another embodiment, the downsized plastic material maybe classified by weight, wherein higher weight correlates with higher density, but not with higher size.

In yet another embodiment, the downsized plastic material maybe classified by weight, wherein higher weight correlates with higher density, but not with necessarily with higher size, wherein the downsized plastic material may not be removed by the classification unit due to high density and weight. For example, a plastic material may be < 300 µm or < 100 µm, but may not be removed by air classification due to its reduced size-to-weight ratio. In one embodiment the size classification unit may be adjusted, comprising increasing the airflow velocity if the classification unit is an air classification unit, or reducing the size cut-off of the sieve if the classification unit is a sieve. In another embodiment, size classification units may be combined, comprising combining air classification units with sieves.

In one embodiment, the downsized plastic waste material is characterized by a particle size distribution from 0.01 to 25 mm, preferably 0.1 to 25 mm, more preferably 1 to 20 mm and most preferably 5 to 15 mm. In a preferred embodiment, the downsized plastic waste material has particle size ≥ 100 µm.

In one embodiment, the downsized material is divided in at least two size groups, one that comprises the plastic material that is < 300 µm, preferably < 100 µm, and one that comprises the plastic material that is > 100 µm, preferably > 300 µm, wherein the larger fraction is removed from further processing and the smaller fraction is provided to the dissolution step of the present invention.

In one embodiment, washing said plastic waste in step b.ii is performed at a temperature in the range of from 15 to 95 °C, more preferably from 30 to 80 °C, most preferably from 50 to 70 °C.

In one embodiment the washing liquid in step b.ii is water and comprises the addition of at least one detergent and/or sodium hydroxide (NaOH), wherein the washing is performed for preferably 5 to 30 min, more preferably 10 to 25 min, even more preferably 10 to 20 min, even more preferably 12 to 18 min, most preferably 14 to 16 min.

In one embodiment, said detergent in step b.ii is selected from the group comprising cocoamidopropyl-betaine, sulfobetaine, amphoacetate, disodium cocoamphodiacetate, cationic surfactants such as distearyl dimethyl ammonium chloride or esterquats, anionic tensides such as alkyl carboxylates, alkyl benzosulfonates, secondary alkyl sulfonates, fatty alcohol sulfates, alkyl ethersulfates, sulfoacetates or taurides, and non-ionic surfactants such as polyalkylene glycol ether, fatty alcohol propoxylates, alkyl glucosides or sodium lauryl sulfate.

In some embodiments, the washing step is performed in a friction washer, wherein the polymer waste material is transported in a contrary direction, to the washing liquid, resulting in friction to facilitate the removal of pollution.

In one embodiment, the material washing in step b.ii is performed in an aqueous NaOH solution with a concentration of NaOH in the range of from 1 to 5 vol%, preferably from 2 to 4 vol%, most preferably from 2.5 to 3.5 vol%.

In some embodiments, the solvent used to dissolve the at least one target polymer material is a single organic solvent or a mixture comprising at least one organic solvent, preferably a mixture of two or more organic solvents.

In one embodiment, the dissolution of the at least one target polymer is initiated by addition of a solvent or mixtures of solvents.

In some embodiments organic solvents such as saturated or unsaturated aliphatic or aromatic hydrocarbons are utilized, selected from but not limited to linear saturated alkanes such as but not limited to n-heptane or n-octane, branched alkanes such as but not limited to iso-heptane or iso-octane, cyclic alkanes such as but non-exclusive cyclohexane and methylcyclohexane, and/or mixtures thereof.

In another embodiment polar solvents such as but not limited to formic acid, acetic acid, acetic acid ester, ketones such as acetone, methyl ethyl ketone (MEK) or propanone and alcohols such as methanol, ethanol or polyols such as glycol or 2-propanol, dimethyl sulfoxide (DMSO) or mixtures thereof may be applied.

In one embodiment, the at least one target polymer is selected from the group comprising poly ethylene (PE), poly propylene (PP), poly ethylene terephthalate (PET), poly styrene (PS), ethylene-vinyl-alcohol (EVOH), poly butylene terephthalate (PBT) and said at least one non-target polymer is high-density poly ethylene (HDPE).

In one embodiment, the at least one target polymer is selected from the group comprising polyethylene terephthalate (PET), polystyrene (PS), ethylene-vinyl-alcohol (EVOH), said at least one non-target polymer is high-density polyethylene (HDPE) and said solvent is selected from the group methyl ethyl ketone (MEK), dimethyl sulfoxide (DMSO), nitrobenzene, phenol, and o-chlorophenol, or mixtures thereof.

In one embodiment, the at least one target polymer is polypropylene (PP) or polybutylene terephthalate (PBT), and said at least one non-target polymer is high-density polyethylene (HDPE) and said solvent is selected from the group comprising saturated or unsaturated aliphatic or aromatic hydrocarbons or mixtures thereof. In a preferred embodiment linear saturated alkane is n-heptane or n-octane. In a preferred embodiment branched alkane is iso-heptane or iso-octane. In a preferred embodiment cyclic alkane is cyclohexane or methylcyclohexane. In a preferred embodiment aromatic hydrocarbon is xylene.

In one embodiment, dissolving in step c is carried out by addition of at least one solvent or a mixture of solvents to said plastic waste, in particular pre-treated polymeric input material, preferably using a heating system, wherein said polymer is essentially soluble in said at least one solvent or mixture of solvents, or vice versa.

In one embodiment the dissolution is conducted at a pressure of 6 bar, more preferably less than 2 bar, most preferably at a pressure of 1 to 1.2 bar, in particular at atmospheric pressure, no additional pressure has to be applied in this case.

Preferably the solvent for the at least one target polymer material comprises at least 60 wt% of an organic solvent, more preferably 80 wt% of an organic solvent, even more preferably at least 90 wt% of an organic solvent, most preferably at least 95 wt% of an organic solvent.

The content of water in said solvent, if any, is preferably below 40 wt%, more preferably below 20 wt%, most preferably below 10 wt%.

In one embodiment, the dissolution of the plastic waste input material comprises dissolving the at least one target polymer at least partially in the at least one solvent in a vessel, in particular a closed and/or gastight vessel comprising the solvent, wherein an agitator for stirring the suspension or solution is provided. The agitator may be connected to said vessel and/or it may be disposed in said vessel. In some embodiments it is possible to dispose the agitator within the vessel without connection to the vessel, for example by hanging the agitator into the vessel from above. The suspension or solution is preferably stirred for at least 15 min, in particular for at least 30 min. Preferably, the suspension or solution is stirred for less than 6 h, in particular for less than 2 h (120 min). It was found that stirring expedites dissolving the at least one target polymer in the solvent.

In one embodiment, the average temperature of the solvent or a mixture of solvents in step c is in the range of from 50 to 160 °C, preferably from 70 to 160 °C, even more preferably from 70 to 140 °C, even more preferably from 80 to 120 °C, even more preferably from 90 to 115 °C, most preferably from 100 to 110 °C.

In some embodiments the at least one target polymer is low-density polyethylene (LDPE), high-density polyethylene (HDPE), or polypropylene (PP) and the at least one solvent is n-heptane, n-octane or n-nonane and/or mixtures thereof.

For the dissolution of low-density polyethylene (LDPE) as the at least one target polymer an average temperature of 80 to 120 °C, more preferably 90 to 115 °C most preferably of 100 to 110 °C and/or a pressure of 0.8 to 1.5 bar was found to be particularly suitable.

Regarding polypropylene (PP) as the at least one target polymer an average temperature of 120 to 160 °C, most preferably 125 to 135 °C was found to be particularly suitable.

For high-density polyethylene (HDPE) an average dissolution temperature of 100 to 140 °C, most preferably of 115 to 135 °C and/or a pressure of 1 to 2 bar was found to be particularly suitable.

For polyvinyl chloride (PVC) acetone, 2-butanone, 2-methyl-tetrahydrofuran was found to be a particularly suitable solvent, in particular at an average temperature of 55 to 160 °C, most preferably at 70 to 120 °C.

For polyamide (PA), in particular polyamide-6, propylene glycol was found to be a particularly suitable solvent, preferably at an average temperature of 80 to 160 °C.

In some embodiments the at least one target polymer is dissolved in said solvent or said mixture of solvents in an amount not less than 5 wt%, more preferably not less than 7 wt%, more preferably not less than 10 wt%, most preferably not less than 12 wt% based on the polymer weight dissolved in the total volume of the solvent or mixture of solvents.

In one embodiment, the at least one non-target polymer is dissolved in the solution or suspension in step c in an amount of not less than 95 wt%, preferably not less than 97 wt%, more preferably not less than 98 wt%, even more preferably not less than 99 wt%, most preferably not less than 99.5 wt% based on the total amount of non-target polymer.

In one embodiment, the at least one target polymer is dissolved in the solution or suspension in step c in an amount of not less than 95 wt%, preferably not less than 97 wt%, more preferably not less than 98 wt%, even more preferably not less than 99 wt%, most preferably not less than 99.5 wt% based on the total amount of target polymer.

In one embodiment, said method comprises hot washing steps, decolorization by precipitation and odor removal the polymer material, the dissolving is carried out by utilizing a heating system and comprises the additional step of separating non-soluble solid material residues from said polymer solution or suspension in a first hot liquid-solid separation step.

In one embodiment, the solid-liquid separation is conducted by means of centrifugation at a relative centrifugal force (RCF) of 1000 to 5000 g, preferably at 1400 to 4000 g, more preferably at 1600 to 3000 g, more preferably at 1800 to 2900 g, most preferably at 1900 to 2800 g.

In some embodiments the at least one target polymer is dissolved in said solvent or said mixture of solvents in an amount of at least 5 wt%, more preferably at least 7 wt%, most preferably 10 wt%, based on the total weight of said solvent or mixture of solvents and the polymer that is dissolved.

In some embodiments the precipitation step, is conducted at a temperature below the precipitation temperature of the at least one impurity and/or the at least one additive or mixtures thereof.

In one embodiment, said additive in steps e, g and i is used as adsorbent and is selected from the group comprising bleaching earths, fuller's earth, molecular sieves, zeolites, celite, perlites, quartz sand, activated carbon, silica gel, calcium sulfate hemihydrate, thermostabilizers or mixtures thereof.

In one embodiment, the amount of the at least one additive in steps e, g and i is between 0.1 to 30 wt%, preferably between 2.5 to 20 wt%, more preferably between 5 to 15 wt%, most preferably 7.5 to 12.5 wt% with respect to the at least one target polymer.

In one embodiment, said additive is bleaching earth and the amount of added bleaching earth is preferably 0.1 to 30 wt%, more preferably 1 to 25 wt%, even more preferably 1.5 to 15 wt%, even more preferably 2.5 to 12.5 wt%, most preferably 5 to 10 wt%.

In one embodiment, said additive in steps e, g and i has an inner specific surface area in the range from 120 to 2000 m²/g, preferably from 150 to 1500 m²/g, more preferably from 200 to 1500 m²/g, even more preferably from 250 to 1500 m²/g, most preferred from 250 to 1000 m²/g.

In some embodiments removing the residual solvent from the purified solution comprising the target polymer in step j is conducted by means of filtration, crystallization, centrifugation, spray drying, evaporation, or distillation, preferably by filtration or evaporation, most preferred by flash-evaporation.

In one embodiment, the degassing of the purified target polymer material in step k is conducted at a pressure below atmospheric pressure in a diffusion process, based on continuous air exchange.

In one embodiment, the hot liquid-solid separation in steps d, h and/or i is conducted by utilizing a solid-wall scroll centrifuge (decanter), centrifuge, carrousel extractor, metal sieve, ceramic sieve, paper filtration, membrane filtration, absorbent cotton, glass filtration, sand filtration, gypsum filtration, activated carbon filtration, ultra-filtration, cross-flow filtration, membrane filtration and/or mixtures thereof.

In one embodiment, the hot liquid-solid separation in steps d, h and/or i is realized by means of mechanical liquid-solid separation, such as but not limited to centrifugation, filtration, cross-flow filtration, thermal solvent separation, mechanical solid-liquid separation, cross-flow filtration and/or flash evaporation.

In one embodiment the centrifuge is a gastight centrifuge, in particular wherein the suspension may be centrifuged under gastight conditions.

In some embodiments the solid-liquid separation steps remove any particles that weigh more than 1000 mg, in particular more than 100 mg, preferably more than 10 mg. In some embodiments the solid-liquid separation removes any particles that weigh more than 50 mg, in particular more than 5 mg, preferably more than 1 mg. After solid-liquid separation the suspension preferably separates into a solution comprising the at least one target polymer material and solid particles.

In some embodiments the solid-liquid separation steps remove at least 50 wt%, more preferably 90 wt%, most preferably 99 wt% of any non-dissolved material including impurity in relation to their initial total amount, preferably by means of centrifugation.

In some embodiments the oxygen content within the centrifuge is below 15 wt%, more preferably below 10 wt%, more preferably below 7 wt%, even more preferably below 5 wt%, most preferably less than 1 wt% based on the total gas volume within the centrifuge.

In one embodiment, the hot liquid-solid separation in steps d, h and/or i is conducted by means of filtration, such as but not limited to membrane filtration. In one embodiment the hot liquid-solid separation in steps d, h and/or i is conducted by means of membrane filtration wherein the filtration membrane is made from a material selected from a group comprising but not limited to polyamide, polyvinylidene difluoride, modified cellulose, sintered glass materials, sintered silicates, metal mesh filtration objects, polysulfone, polyethersulfone, polydimethylsiloxane and/or, polypropylene.

In a further embodiment according to the invention filtration aids, purification agents or mixtures thereof are selected from but not limited to perlites, in a quality range from 0.01 to 1.5 mm and 1.5 to 3.0 mm in diameter, or diatomaceous earths, in a quality range from 3.0 to 1.0 mm and 10.0 to 200.0 µm in diameter.

In one embodiment, said purification method leads to a separation rate of inorganic pigments, such as but not limited to metal ions Ca²⁺, Ti^{2+/3+/4+}, Fe^{2+/3+/4+}, Zn²⁺ of over 50 wt%, more preferably over 60 wt%, more preferably over 70 wt%, more preferably over 80 wt%, even more preferably over 90 wt%, most preferably over 95 wt% in relation to the total amount of these ions.

In one embodiment, the recovery of the at least one purified target polymer material in step j comprises a crystallization step, selected from the following methods:
- crystallization of the polymer by cooling down or
- crystallization of the polymer by adding a nucleant or
- crystallization of the polymer by adding a co-solvent selected from polar solvents, water, ethanol, ethyl-acetate
and/or mixtures thereof.

In some embodiments at least 50 wt%, more preferably 75 wt%, even more preferably at least 90 wt%, most preferably at least 99 wt% of the solvent is removed in step j.

In one embodiment of said method, wherein subsequent to the solvent removal and recovery of the at least one purified target polymer material the at least one purified target polymer material is directly pelletized if the remaining thermal energy renders the material moldable or pelletized subsequent to melting and extrusion if the material is cooled down and hence hardened in the recovery process, or powder dried subsequent to spray drying.

In another embodiment of said method, the extrusion of the at least one target polymer is conducted at an average temperature of at least 150 °C, more preferably of at least 180 °C, even more preferably of at least 200 °C, most preferably of at least 220 °C.

In one embodiment of said method, the pelletized or powder dried at least one purified target polymer material is degassed, for example in a silo, at a pressure below atmospheric pressure in a diffusion process, based on continuous air exchange to generate a concentration gradient of odor-causing components between the pelletized material and the surrounding atmosphere in order to separate the residual solvent content and/or any volatile molecules such as but not limited to odorants from the material matrix.

In another preferred embodiment said method includes hot washing steps, decolorization by precipitation and odor removal the polymer material, prior to and/or subsequent to the polymer and solvent separation step at least one non-target polymer chosen from but not limited to polyethylene terephthalate (PET), polystyrene (PS), expanded polystyrene (EPS), styrene acrylonitrile resin (SAN), acrylonitrile styrene acrylate (ASA), polyoxymethylene (POM), polybutylene terephthalate (PBT), acrylonitrile butadiene styrene (ABS), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, polyamide (PA), polyvinyl chloride (PVC), polypropylene (PP), polyvinyl chloride (PVC), polyamide (PA) such as PA6, PA66, or PA6.66, styrene-acrylonitrile resin (SAN), acrylonitrile styrene acrylate (ASA), polyoxymethylene (POM), poly 1-butylene (PB), polybutylene terephthalate (PBT), polycarbonate (PCa) and acrylonitrile butadiene styrene (ABS) and/or a mixture thereof or at least one additive chosen from but not limited to, filtration aids, purification agents, bleaching earth, fuller's earth, molecular sieves, zeolites, celite, perlites, quartz sand, activated carbon, silica gel, calcium sulfate hemihydrate, thermostabilizers or mixtures thereof, is added to the polymer solution or suspension to adsorb residual impurities in the polymer solution or suspension and separating said impurities, adsorbed by said at least one additive or mixtures thereof from said polymer solution or suspension in an additional liquid-solid separation step.

In a preferred embodiment the subject-matter of the present invention relates to the method for purification of a polymer material from plastic waste, wherein said polymer material comprises at least one target polymer, at least one non-target polymer and at least one impurity incorporated in the matrix or adhered at the surface of said polymer material, wherein the method comprises the steps of
a. providing said plastic waste in solid form;
b. optionally mechanically pre-treating said plastic waste by
   i. downsizing said plastic waste and classification of the particle sizes;
   ii. washing said plastic waste in an aqueous solution, optionally comprising a detergent and/or NaOH, and
   iii. optionally drying the plastic waste obtained from step b.ii to remove excess water;
c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d. separating non-soluble solid materials from the suspension comprising the at least one target polymer, the at least one non-target polymer and the at least one impurity obtained in step c in a first liquid-solid separation step;
e. adding at least one additive to the solution or suspension comprising the at least one target polymer, the at least one non-target polymer and the at least one impurity, wherein said the at least one additive is essentially non-soluble in the at least one solvent or mixture of solvents;
f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents;
g. adding at least one additive to the suspension comprising the at least one target polymer obtained in step f, wherein said the at least one additive is essentially non-soluble in the at least one solvent or mixture of solvents;
h. separating the precipitate containing the at least one impurity, the at least one non-target polymer and optionally other non-soluble solid materials in a second liquid-solid separation step;
i. adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j. removing the residual solvent from the purified solution comprising the target polymer, and
k. degassing the purified target polymer material.

In a preferred embodiment the subject-matter of the present invention relates to the method for purification of a polymer material from plastic waste, wherein said polymer material comprises at least one target polymer, at least one non-target polymer and at least one impurity incorporated in the matrix or adhered at the surface of said polymer material, wherein the method comprises the steps of
a. providing said plastic waste in solid form;
b. optionally mechanically pre-treating said plastic waste by
   i. downsizing said plastic waste and classification of the particle sizes, in particular by sieving, or contacting of said downsized plastic material with airstream, preferably by means of passing said downsized plastic material through air counter-flow, or a combination thereof;
   ii. washing said plastic waste in an aqueous solution, optionally comprising a detergent and/or NaOH, and
   iii. optionally drying the plastic waste obtained from step b.ii to remove excess water;
c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d. separating non-soluble solid materials from the suspension comprising the at least one target polymer, the at least one non-target polymer and the at least one impurity obtained in step c in a first liquid-solid separation step;
e. adding at least one additive to the solution or suspension comprising the at least one target polymer, the at least one non-target polymer and the at least one impurity, wherein said the at least one additive is essentially non-soluble in the at least one solvent or mixture of solvents;
f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents;
g. adding at least one additive to the suspension comprising the at least one target polymer obtained in step f, wherein said the at least one additive is essentially non-soluble in the at least one solvent or mixture of solvents;
h. separating the precipitate containing the at least one impurity, the at least one non-target polymer and optionally other non-soluble solid materials in a second liquid-solid separation step;
i. adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j. removing the residual solvent from the purified solution comprising the target polymer, and
k. degassing the purified target polymer material.

In a preferred embodiment the subject-matter of the present invention relates to the method for purification of a polymer material from plastic waste, wherein said polymer material comprises at least one target polymer, at least one non-target polymer and at least one impurity incorporated in the matrix or adhered at the surface of said polymer material, wherein the method comprises the steps of
a. providing said plastic waste in solid form;
b. optionally mechanically pre-treating said plastic waste by
   i. downsizing said plastic waste and classification of the particle sizes, in particular by sieving, or contacting of said downsized plastic material with airstream, preferably by means of passing said downsized plastic material through air counter-flow, or a combination thereof;
   ii. washing said plastic waste in an aqueous solution, optionally comprising a detergent and/or NaOH, and
   iii. optionally drying the plastic waste obtained from step b.ii to remove excess water;
c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d. separating non-soluble solid materials from the suspension comprising the at least one target polymer, the at least one non-target polymer and the at least one impurity obtained in step c in a first liquid-solid separation step;
e. adding at least one additive to the solution or suspension comprising the at least one target polymer, the at least one non-target polymer and the at least one impurity, wherein said the at least one additive is essentially non-soluble in the at least one solvent or mixture of solvents;
f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents, wherein the cloud point of the at least one non-target polymer in said solvent or the mixture of solvents is at least 2 K higher, preferably at least 5 K higher, more preferably at least 10 K higher, even more preferably at least 15 K higher than that cloud point of the at least one target polymer in said solvent or mixture of solvents;
g. adding at least one additive to the suspension comprising the at least one target polymer obtained in step f, wherein said the at least one additive is essentially non-soluble in the at least one solvent or mixture of solvents;
h. separating the precipitate containing the at least one impurity, the at least one non-target polymer and optionally other non-soluble solid materials in a second liquid-solid separation step;
i. adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j. removing the residual solvent from the purified solution comprising the target polymer, and
k. degassing the purified target polymer material.

In a preferred embodiment the subject-matter of the present invention relates to the method for purification of a polymer material from plastic waste, wherein said polymer material comprises at least one target polymer, at least one non-target polymer and at least one impurity incorporated in the matrix or adhered at the surface of said polymer material, wherein said at least one non-target polymer is selected from the group polyethylene (PE), polypropylene (PP) and polyvinyl chloride (PVC), polyethylene terephthalate (PET) and polyamide (PA) such as PA6, PA6.10, PA6.12, PA6.66, PA 69, PA612, PA 11, PA12, PA46, PA1212 or lactams, or a mixture thereof, wherein the method comprises the steps of
a. providing said plastic waste in solid form;
b. optionally mechanically pre-treating said plastic waste by
   i. downsizing said plastic waste and classification of the particle sizes, in particular by sieving, or contacting of said downsized plastic material with airstream, preferably by means of passing said downsized plastic material through air counter-flow, or a combination thereof;
   ii. washing said plastic waste in an aqueous solution, optionally comprising a detergent and/or NaOH, and
   iii. optionally drying the plastic waste obtained from step b.ii to remove excess water;
c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d. separating non-soluble solid materials from the suspension comprising the at least one target polymer, the at least one non-target polymer and the at least one impurity obtained in step c in a first liquid-solid separation step;
e. adding at least one additive to the solution or suspension comprising the at least one target polymer, the at least one non-target polymer and the at least one impurity, wherein said the at least one additive is essentially non-soluble in the at least one solvent or mixture of solvents;
f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents, wherein the cloud point of the at least one non-target polymer in said solvent or the mixture of solvents is at least 2 K higher, preferably at least 5 K higher, more preferably at least 10 K higher, even more preferably at least 15 K higher than that cloud point of the at least one target polymer in said solvent or mixture of solvents;
g. adding at least one additive to the suspension comprising the at least one target polymer obtained in step f, wherein said the at least one additive is essentially non-soluble in the at least one solvent or mixture of solvents;
h. separating the precipitate containing the at least one impurity, the at least one non-target polymer and optionally other non-soluble solid materials in a second liquid-solid separation step;
i. adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j. removing the residual solvent from the purified solution comprising the target polymer, and
k. degassing the purified target polymer material.

In another aspect, the subject-matter of the present invention relates to a purified target polymer (recyclate) which is obtainable by the method according to any of the above embodiments.

In yet another aspect, the subject-matter of the present invention relates to the recyclate comprising the target polymer, wherein said recyclate is characterized by the grade of decolorization which is characterized by:
- a yellowness index of less than 5,
- a luminance value of more than 85, and
- the residual ash content of less than 0.5 wt%, preferably less than 0.1 wt%.

In one embodiment, the subject-matter of the present invention relates to the recyclate comprising the target polymer, wherein said target polymer is selected from the group comprising polyethylene terephthalate (PET), polystyrene (PS), expanded polystyrene (EPS), ethylene-vinyl-alcohol (EVOH) styrene-acrylonitrile resin (SAN), acrylonitrile styrene acrylate (ASA), polyoxymethylene (POM), , polybutylene terephthalate (PBT), acrylonitrile butadiene styrene (ABS), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polypropylene (PP), , polyamide (PA) such as PA6, PA6.10, PA6.12, PA6.66, PA 69, PA612, PA 11, PA12, PA46, PA1212 or lactams, polycarbonate (PCa) and/or a mixture thereof.

In one embodiment, the recyclate has a residual ash content of less than 0.5 wt%, preferably less than 0.4 wt%, more preferably less than 0.3 wt%, even more preferably less than 0.2 wt%, most preferably less than 0.1 wt%.

With the above context, the following consecutively numbered embodiments provide further specific aspects of the invention:
1. A method for purification of a polymer material from plastic waste, wherein said polymer material comprises at least one target polymer, at least one non-target polymer and at least one impurity incorporated in the matrix or adhered at the surface of said polymer material,
   wherein the method comprises the steps of
   a. providing said plastic waste in solid form;
   b. optionally mechanically pre-treating said plastic waste by
      i. downsizing said plastic waste and classification of the particle sizes, and/or
      ii. washing said plastic waste in an aqueous solution, optionally comprising a detergent and/or NaOH, and
      iii. optionally drying the plastic waste obtained from step b.ii to remove excess water;
   c. dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
   d. optionally, separating non-soluble solid materials from the suspension comprising the at least one target polymer, the at least one non-target polymer and the at least one impurity obtained in step c in a first liquid-solid separation step;
   e. optionally, adding at least one additive to the solution or suspension comprising the at least one target polymer, the at least one non-target polymer and the at least one impurity, wherein said the at least one additive is essentially non-soluble in the at least one solvent or mixture of solvents;
   f. precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents;
   g. optionally, adding at least one additive to the suspension comprising the at least one target polymer obtained in step f, wherein said the at least one additive is essentially non-soluble in the at least one solvent or mixture of solvents;
   h. separating the precipitate containing the at least one impurity, the at least one non-target polymer and optionally other non-soluble solid materials in a second liquid-solid separation step;
   i. optionally, adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
   j. removing the residual solvent from the purified solution comprising the target polymer, and
   k. optionally degassing the purified target polymer material.
2. The method according to embodiment 1, wherein said polymer material comprises the at least one target polymer in an amount of at least 55 wt%, preferably at least 65 wt%, more preferably at least 75 wt%, most preferred at least 85 wt%.
3. The method according to embodiment 1 or 2, wherein said polymer material comprises the at least one non-target polymer in an amount of at most 45 wt%, preferably at most 35 wt%, more preferably at most 25 wt%, most preferred at most 15 wt%.
4. The method according to any one of embodiments 1 to 3, wherein the cloud point of the at least one non-target polymer in said solvent or the mixture of solvents is at least 2 K higher, preferably at least 5 K higher, more preferably at least 10 K higher, even more preferably at least 15 K higher than that cloud point of the at least one target polymer in said solvent or mixture of solvents.
5. A method according to any one of embodiments 1 to 4, wherein the plastic waste is selected from the group comprising films, flakes and/or multi-layer plastic waste having the maximum layer thickness between 5 µm to 10 mm, preferably between 5 µm to 1 mm, more preferably between 5 µm to 500 µm, even more preferably between 50 µm to 500 µm, even more preferably between 50 µm to 250 µm, most preferably between 50 µm to 100 µm.
6. The method according to any one of embodiments 1 to 5, wherein said the at least one impurity is selected from the group comprising coloring agents such as pigments or dyes, bonding agents, thermostabilizers, UV-stabilizers, acid scavengers, fillers, light stabilizers, flame retardants, antistatic agents, lubricants, slip agents, biocides or mixtures thereof.
7. The method according to embodiment 6, wherein the pigments are selected from the group comprising TiOz, carbon black/soot, colored inorganic pigments such as metal oxides, metal hydroxides and metal sulfides, azo pigments, mono-azo pigments, di-azo pigments, azo-lake pigments, polycyclic pigments, day glow fluorescent pigments and/or mixtures thereof, and the dyes are selected from carbonyl dyes, cyanine dyes, phthalocyanines, di-oxazines, and/or a mixture thereof.
8. The method according to any one of embodiments 1 to 7, wherein the at least one target polymer is selected from the group comprising polyethylene terephthalate (PET), polystyrene (PS), expanded polystyrene (EPS), ethylene-vinyl-alcohol (EVOH), styrene acrylonitrile resin (SAN), acrylonitrile styrene acrylate (ASA), polyoxymethylene (POM), polybutylene terephthalate (PBT), polypropylene (PP), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polyamide (PA) such as PA6, PA6.10, PA6.12, PA6.66, PA 69, PA612, PA 11, PA12, PA46, PA1212 or lactams, polycarbonate (PCa) and acrylonitrile butadiene styrene (ABS) and/or a mixture thereof.
9. The method according to embodiment 8, wherein said at least one target polymer is selected from the group polyethylene (PE), polypropylene (PP), poly-vinyl chloride (PVC), polyethylene terephthalate (PET) and polyamide (PA) such as PA6, PA6.10, PA6.12, PA6.66, PA 69, PA612, PA 11, PA12, PA46, PA1212 or lactams, or a mixture thereof.
10. The method according to any one of embodiments 1 to 9, wherein the at least one non-target polymer is selected from the group comprising polyethylene terephthalate (PET), polystyrene (PS), expanded polystyrene (EPS), ethylene-vinyl-alcohol (EVOH) styrene acrylonitrile resin (SAN), acrylonitrile styrene acrylate (ASA), polyoxymethylene (POM), polybutylene terephthalate (PBT), polypropylene (PP), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polyamide (PA) such as PA6, PA6.10, PA6.12, PA6.66, PA 69, PA612, PA 11, PA12, PA46, PA1212 or lactams, polycarbonate (PCa) and acrylonitrile butadiene styrene (ABS) and/or a mixture thereof.
11. The method according to embodiment 10, wherein said at least one non-target polymer is selected from the group polyethylene (PE), polypropylene (PP) and poly-vinyl chloride (PVC), polyethylene terephthalate (PET) and polyamide (PA) such as PA6, PA6.10, PA6.12, PA6.66, PA 69, PA612, PA 11, PA12, PA46, PA1212 or lactams, or a mixture thereof.
12. The method according to any one of embodiments 1 to 11, wherein the at least one target polymer is selected from the group comprising polyethylene (PE), polypropylene (PP), polyethylene terephthalate (PET), polystyrene (PS), ethylene-vinyl-alcohol (EVOH), polybutylene terephthalate (PBT) and said at least one non-target polymer is high-density polyethylene (HDPE).
13. The method according to embodiment 12, wherein the at least one target polymer is selected from the group comprising polyethylene terephthalate (PET), polystyrene (PS), ethylene-vinyl-alcohol (EVOH), said at least one non-target polymer is high-density polyethylene (HDPE) and said solvent is selected from the group methyl ethyl ketone (MEK), dimethyl sulfoxide (DMSO), nitrobenzene, phenol, and o-chlorophenol, or mixtures thereof.
14. The method according to embodiment 12, wherein the at least one target polymer is polypropylene (PP) or polybutylene terephthalate (PBT), said at least one non-target polymer is high-density polyethylene (HDPE) and said solvent is selected from the group comprising saturated or unsaturated aliphatic or aromatic hydrocarbons, preferably linear saturated alkanes such as but not limited to n-heptane or n-octane, branched alkanes such as but not limited to iso-heptane or iso-octane, or cyclic alkanes such as but not limited to cyclohexane and methylcyclohexane, xylene and/ or mixtures thereof.
15. Method according to any one of embodiments 1 to 14, wherein the average temperature of the solvent or a mixture of solvents in step c is in the range of from 50 to 160 °C, preferably from 70 to 160 °C, even more preferably from 70 to 140 °C, even more preferably from 80 to 120 °C, even more preferably from 90 to 115 °C, most preferred from 100 to 110 °C.
16. Method according to any one of embodiments 1 to 15, wherein the at least one non-target polymer is dissolved in the solution or suspension in step c in an amount of not less than 95 wt%, preferably not less than 97 wt%, more preferably not less than 98 wt%, even more preferably not less than 99 wt%, most preferably not less than 99.5 wt% based on the total amount of non-target polymer.
17. Method according to any one of embodiments 1 to 16, wherein the at least one target polymer is dissolved in the solution or suspension in step c in an amount of not less than 95 wt%, preferably not less than 97 wt%, more preferably not less than 98 wt%, even more preferably not less than 99 wt%, most preferably not less than 99.5 wt% based on the total amount of target polymer.
18. The method according to any one of embodiments 1 to 17, wherein the solid-liquid separation in steps d, h or i is conducted by means of centrifugation at a relative centrifugal force (RCF) of 1000 to 5000 g, preferably at 1400 to 4000 g, more preferably at 1600 to 3000 g, more preferably at 1800 to 2900 g, most preferably at 1900 to 2800 g.
19. The method according to any one of embodiments 1 to 18, wherein the amount of the at least one additive in steps e, g and i is between 0.1 to 30 wt%, preferably between 2.5 to 20 wt%, more preferably between 5 to 15 wt%, most preferably 7.5 to 12.5 wt% with regard to the at least one target polymer.
20. Method according to any one of embodiments 1 to 19, wherein the removing the residual solvent from the purified solution comprising the target polymer in step j is conducted by means of filtration, crystallization, centrifugation, spray drying, evaporation, or distillation, preferably flash evaporation.
21. The method according to any one of embodiments 1 to 20, wherein the degassing of the purified target polymer material in step k is conducted at a pressure below atmospheric pressure in a diffusion process, based on continuous air exchange.
22. The method according to any one of embodiments 1 to 21, wherein the concentration of NaOH in the aqueous solution in step b.ii is in the range of from 1 to 5 wt%, preferably from 2 to 4 wt%, most preferably from 2.5 to 3.5 wt%.
23. The method according to any one of embodiments 1 to 22, wherein said additive in steps e, g and i has an inner specific surface area in the range from 120 to 2000 m²/g, preferably from 150 to 1500 m²/g, more preferably from 200 to 1500 m²/g, even more preferably from 250 to 1500 m²/g, most preferred from 250 to 1000 m²/g.
24. The method according to any one of embodiments 1 to 23, wherein said additive in steps e, g and i-is selected from the group comprising bleaching earths, fuller's earth, molecular sieves, zeolites, celite, perlites, quartz sand, activated carbon, silica gel, calcium sulfate hemihydrate, thermostabilizers or mixtures thereof.
25. The method according to any one of embodiments 1 to 24, wherein said detergent in step b.ii is selected from the group comprising cocoamidopropyl-betaine, sulfobetaine, amphoacetate, disodium cocoamphodiacetate, cationic surfactants such as distearyl dimethyl ammonium chloride or esterquats, anionic tensides such as alkyl carboxylates, alkyl benzosulfonates, secondary alkyl sulfonates, fatty alcohol sulfates, alkyl ethersulfates, sulfoacetates or taurides, and non-ionic surfactants such as polyalkylene glycol ether, fatty alcohol propoxylates, alkyl glucosides or sodium lauryl sulfate.
26. The recyclate which is obtainable by the method according to any one of embodiments 1 to 25.
27. The recyclate comprising the target polymer, wherein said recyclate is characterized by:
   the grade of decolorization which is characterized by a yellowness index of less than 5 and a luminance value of more than 85, and
   the residual ash content of less than 0.5 wt%, preferably less than 0.1 wt%.
28. The recyclate according to embodiment 27 , wherein said target polymer is selected from the group comprising polyethylene terephthalate (PET), polystyrene (PS), expanded polystyrene (EPS), ethylene-vinyl-alcohol (EVOH) styrene-acrylonitrile resin (SAN), acrylonitrile styrene acrylate (ASA), polyoxymethylene (POM), polybutylene terephthalate (PBT), acrylonitrile butadiene styrene (ABS), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polypropylene (PP), , polyamide (PA) such as PA6, PA6.10, PA6.12, PA6.66, PA 69, PA612, PA 11, PA12, PA46, PA1212 or lactams, polycarbonate (PCa) and/or a mixture thereof.

### Examples

In the above-described context, the following examples of especially preferred embodiments provide further specific aspects of the invention

Preferred embodiments of the herein described invention are performed and verified by analytical data. The grade of purification is determined by the amount of reduction of metal ions, determined via X-ray fluorescence analysis (XRF) and the evaluation of the appearance of the obtained purified PI or PC polymer waste material by color measurement via analysis by visible light spectroscopy and calculation of the yellowness index (YI) and the luminance (L*), whereas L* values depict:
- below 80 a dark and opaque to grey and diffuse appearance,
- above 80 a semi-opaque appearance,
- above 90 a more clear and nearly transparent appearance.
and YI values depict:
- above 10 a yellow to semi-yellowish appearance,
- below 10 a low yellowish appearance,
- below 5 a minimized yellowish appearance.

### Example 1

Purification and decolorization of the target polymer PE (LD) from post-consumer polymer waste material is conducted by dissolving in non-polar solvent (fuel-mix), precipitation of impurities using non-target polymer PE (HD), subsequent hot liquid solid separation, solvent separation and odor removal without additional decolorization steps. Only color measurement was performed (sample 1 and 2).

Step 1: Washing, subsequent drying and dissolving of downsized PC polymer material comprising at least 80 wt% of PE
- Providing PC polymer material,
- Preparation of 3 wt% NaOH solution,
- Heating the solution to 80 °C,
- Addition of the downsized PC polymer material,
- Maintaining temperature for 15 min under stirring.

Step 2: Extraction of target polymer from washed PC polymer material, and precipitation step
- Providing 12 wt% washed PC polymer material flakes in solvent tank, filled with a mixture from saturated linear, branched linear and cyclic alkanes,
- Stirring at 110 °C for 45 min,
- Stirring at 95 °C for 5 min,
- Centrifugation at 2000 g for 5 min at reduced temperature of 85 °C.

Step 3: Solvent separation, extrusion, granulation and odor removal
- Providing purified and decolorized polymer solution,
- Evaporation of solvent via flash evaporation at a temperature of above 200 °C and pressure drop of about 50 %,
- Extrusion of solidified target polymer material and production of granules at 200-240 °C and a volumetric flow rate of 1 m³/h,
- Odor removal by subjecting the collected granules to a stream of air above 70 °C for 12 h.

**Table 1:**

| **Granulated material** | **Color measurement** | | **Residual ash content / wt%** |
|---|---|---|---|
| | YI/- | L^{∗} / - | |
| **Raw polymer input material** | 45.1 | 41.6 | 3.5 |
| **Sample 1** | 9.8 | 86.4 | 0.7 |
| **Sample 2** | 5.6 | 88.7 | 0.6 |

### Example 2

Purification and decolorization of the target polymer PE (LD) from post-consumer polymer waste material is conducted by dissolving in non-polar solvent (fuel-mix), precipitation of impurities using non-target polymer PE (HD), additional decolorization using additive, subsequent hot liquid solid separation, solvent separation and odor removal (samples 3, 4, and 5; an additional comparison with sample 4 without adding the additive was also made).

Step 1: Washing, subsequent drying and dissolving of downsized PC polymer material comprising at least 80 wt% of PE
- Providing PC polymer material,
- Preparation of 3 wt% NaOH solution,
- Heating the solution to 80 °C,
- Addition of the downsized PC polymer material,
- Maintaining temperature for 15 min under stirring.

Step 2: Extraction of target polymer from washed PC polymer material, and precipitation step
- Providing 12 wt% washed PC polymer material flakes in solvent tank, filled with a mixture from saturated linear, branched linear and cyclic alkanes,
- Stirring at 110 °C for 45 min,
- Addition of 5 wt% thermostabilizing agent,
- Addition of 5 wt% additive 2 - (bleaching earth / silica gel mixture),
- Stirring at 95 °C for 5 min,
- Centrifugation at 2000 g for 5 min at reduced temperature of 85 °C.

Step 3: Solvent separation, extrusion, granulation and odor removal
- Providing purified and decolorized polymer solution,
- Evaporation of solvent via flash evaporation at a temperature of above 200 °C and pressure drop of about 50 %,
- Extrusion of solidified target polymer material and production of granules at 200-240 °C and a volumetric flow rate of 1 m³/h,
- Odor removal by subjecting the collected granules to a stream of air above 70 °C for 12 h.

### Analysis

All tests are performed with either solid samples taken from the process or liquid supernatant samples obtained after centrifugation steps, all dried before analysis at 95 °C for 24 h.
a) Analysis of total organic carbon (TOC) of sample emissions to evaluate washing step efficiency, performed in Step 1.

**Table 2: Evaluation of washing efficiency by TOC analysis**

| | **Carbon content input / µg C g⁻¹** | **Carbon content after washing / µg C g⁻¹** | **Reduction of volatile carbon components by hot wash / %** |
|---|---|---|---|
| **Sample 1** | 2.6 | 1.4 | 46 |
| **Sample 2** | 8.4 | 0.9 | 89 |
| **Sample 3** | 190.6 | 6.5 | 97 |
| **Sample 4** | 9.4 | 2.1 | 78 |

b) Performing Oxidative-induction Time analysis (OIT) to evaluate purification efficiency of different additives
- differential scanning calorimetry analysis (DSC) of different samples,
- heating curve 25 - 200 °C, 20 K min⁻¹, 100 % N₂, for 3 min,
- isothermal stage at 200 °C for 60 min, 100 % air. 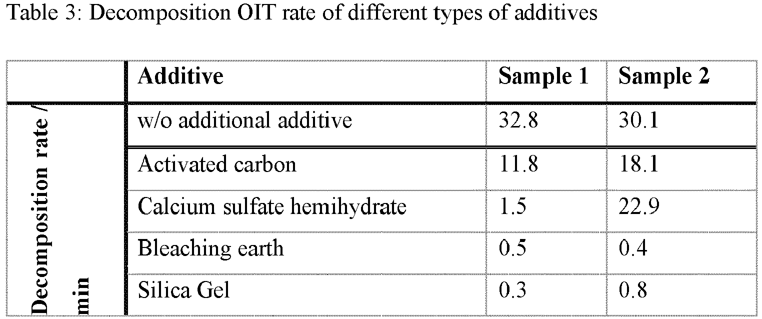
The longer the decomposition takes, the higher is the concentration of residual impurities. In that context bleaching earth and silica gel yielded the highest purification rate with the lowest decomposition time and are most favored.
c) Evaluation of purification by decolorization and elemental analysis
- Color measurements
   ∘ UV/Vis-spectrometer, transmission measurement of thin foil, 100 µm **(Fehler! Verweisquelle konnte nicht gefunden werden.),**
   ∘ light type: D65,
   ∘ determination of L^{∗} and YI,
   ∘ number of single measurements per test: 10,
- Elemental analysis: X-ray fluorescence analysis (XRF).

**Table 4: Evaluation of decolorization and impurity removal**

| **Material** | **Color measurement** | | **Residual ash content / wt%** | **Inorganic pigment content / %** | | | |
|---|---|---|---|---|---|---|---|
| | YI/ | L^{∗} /- | | Ca²⁺ | Ti^{2+/3+/4+} | Fe^{2+/3+/4+} | Zn²⁺ |
| **Raw polymer input material** | 21.4 | 59.1 | 2.5 | - | | | |
| **w/o additional decolorization** | | | | | | | |
| **Sample 4** | 11.1 | 81.6 | 1.1 | 1.132 | 0.184 | 0.001 | 0.002 |
| **additionally decolorized by additive** | | | | | | | |
| **Sample 3** | 4,8 | 91.3 | 0.4 | 0.002 | 0.002 | 0.000 | 0.000 |
| **Sample 4** | 2,4 | 95.5 | 0.2 | - | | | |
| **Sample 5** | 2,3 | 98.2 | 0.1 | | | | |

The color measurements meet the requirements in contrast to the YI and L* values of the untreated post-consumer waste polymeric material. Additionally, the purified material (sample) 4 shows a significantly reduced content on elemental occurrences, present in impurities such as Ca, Ti, Cu and Zn compared to the treated material, which directly indicates the successful purification of the polymeric material. The polymer decomposes with low residual ash which is directly dependent on the luminance value L*. The lower the incombustible residues are, which are left after the combustion of the samples, the higher are their luminance values.
d) Olfactory evaluation after odor removal step
- Tempering closed glass containers at 60 °C in a drying cabinet containing the samples,
- Briefly opening the lid to perceive odor,
- Closing the lid,
- After 5 seconds evaluation of odor according to the following grades.

**Table 5: Odor analysis evaluation ranks**

| **Grade** | **Evaluation** |
|---|---|
| **1** | Not perceptible |
| **2** | Perceptible, not disturbing |
| **3** | Clearly perceptible, but not yet disturbing |
| **4** | Disturbing |
| **5** | Heavily disturbing |
| **6** | Unbearable |

**Table 6: Odor analysis results throughout the process**

| **Sample name** | **Rating** |
|---|---|
| Raw polymer input material w/o washing | 4.2 |
| Dissolved polymer input waste material w/o washing | 4.8 |
| Sample 4, after washing step | 3.2 |
| Sample 4, after precipitation | 2.8 |
| Sample 4, after solvent removal w/o degassing | 2.2 |
| Sample 4, after step 3, with odor removal | 1.5 |

The lower the olfactory rating, the more efficiently the removal of remaining odor according to washing steps and subsequent odor removal step via degassing was conducted.

**Table 7: Further polymer and solvent combinations with suitable Temperature ranges**

| **Target Polymer** | **Non-target polymer** | **Solvent** | **Dissolving Temp. /°C** | **Precipitation Temp. /°C** | **L*** |
|---|---|---|---|---|---|
| PP | HDPE | Organic non-polar solvent mixture | 120 | 95 | > 90 |
| PVC | PS | Polar solvent (MEK) | 75 | 30 | > 75 |
| PET | HDPE | Polar solvent (DMSO) | 150 | 40 | > 87 |
| PA | PET | Polar solvent (acetic acid 96 vol%) | 160 | 70 | > 78 |
| PS | HDPE | Mixture of organic solvent mixture and aprotic polar solvent (MEK, acetic acid ester) | 105 | 60 | > 85 |
| EVOH | HDPE | Polar solvent (DMSO) | 78 | 40 | > 80 |
| PBT | HDPE | Organic non-polar solvent mixture | 130 | 95 | > 82 |

### Brief Description of the Figures

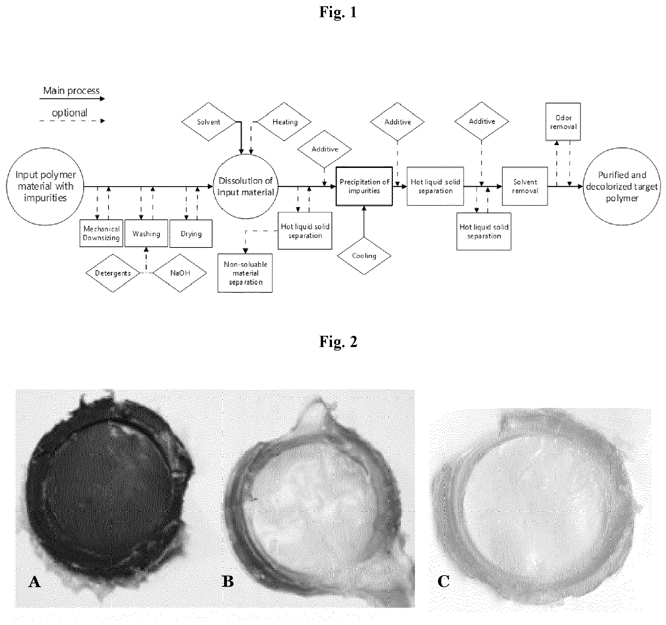

Figure 1 schematically shows the process for purification, decolorizing and optional odor removal of post-consumer or post-industrial plastic material in a process flow diagram including main steps and optional ones.
Figure 2 displays thin foil preparation of processed material according to the invention with thickness of 100 µm each;
   - 2A: purified polymer waste material without treatment;
   - 2B: Sample 4, test foil for color measurement;
   - 2C: Sample 5 test foil for color measurement.
Figure 3 shows drawn films with thickness of 100 µm each from different purification grades with:
   - 3A: polymeric PC waste material without purification;
   - 3B: sample 4, partly purified without additional decolorization by additives;
   - 3C: sample 2; partly purified without additional decolorization by additives;
   - 3D: sample 1; partly purified without additional decolorization by additives;
   - 3E: sample 3; complete purification;
   - 3F: sample 4, complete purification;
   - 3G: sample 5, complete purification.

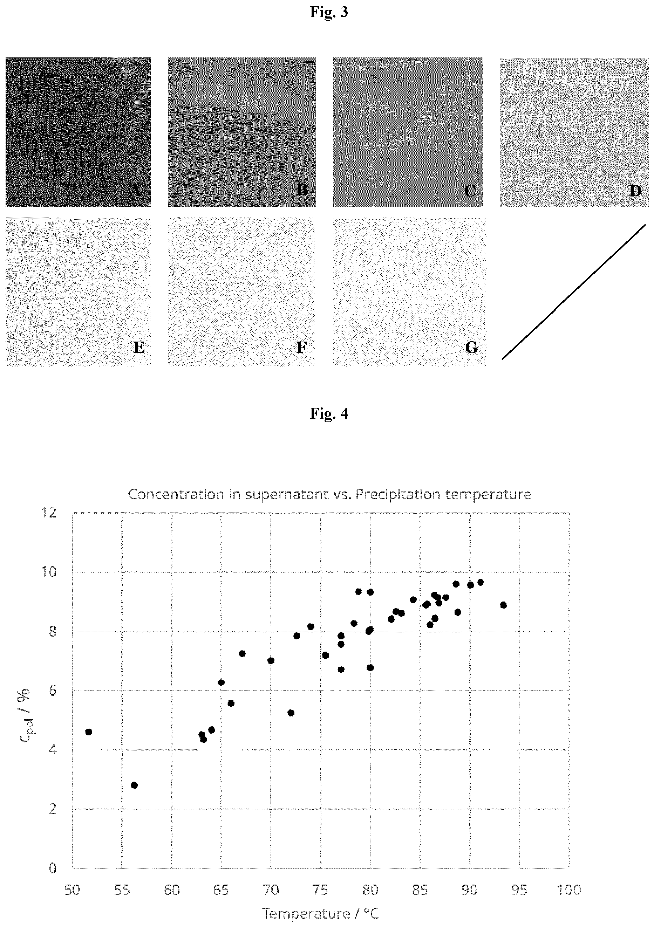

Figure 4 displays a diagraph comprising multiple samples (not shown) with different polymer concentration values obtained by precipitation at different solution temperatures.

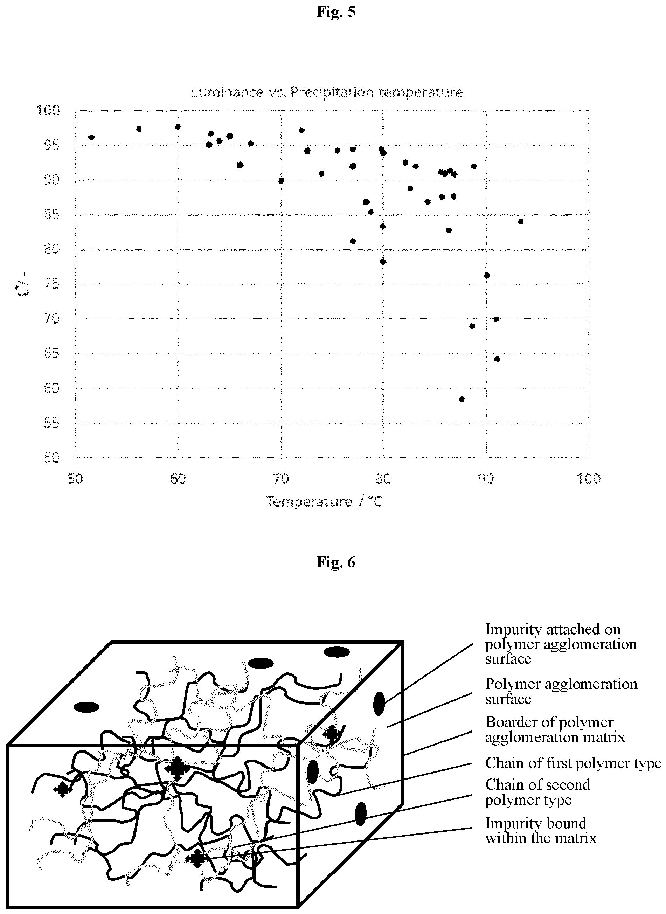

Figure 5 displays a diagraph comprising multiple samples (not shown) with different luminance values obtained by precipitation at different solution temperatures.
Figure 6 displays a polymer chain agglomerate of a two-polymer kind mixture with impurities attached to the polymer surface as well as bound in the polymer matrix.

## Claims

1. A method for purification of a polymer material from plastic waste, wherein said polymer material comprises at least one target polymer, at least one non-target polymer and at least one impurity incorporated in the matrix or adhered at the surface of said polymer material,
wherein the method comprises the steps of
a) providing said plastic waste in solid form;
b) optionally mechanically pre-treating said plastic waste by
i. downsizing said plastic waste and classification of the particle sizes, and/or
ii. washing said plastic waste in an aqueous solution, optionally comprising a detergent and/or NaOH, and
iii. optionally drying the plastic waste obtained from step b.ii to remove excess water;
c) dissolving said polymer material by contacting at least one solvent or a mixture of solvents with said plastic waste to obtain a solution or suspension comprising the at least one target polymer, the at least one non-target polymer and the at least one impurity, preferably using a heating system, wherein the at least one target polymer and the at least one non-target polymer is essentially soluble in the at least one solvent or mixture of solvents;
d) optionally, separating non-soluble solid materials from the suspension comprising the at least one target polymer, the at least one non-target polymer and the at least one impurity obtained in step c in a first liquid-solid separation step;
e) optionally, adding at least one additive to the solution or suspension comprising the at least one target polymer, the at least one non-target polymer and the at least one impurity, wherein said the at least one additive is essentially non-soluble in the at least one solvent or mixture of solvents;
f) precipitating the at least one impurity and the at least one non-target polymer from the solution or suspension comprising the at least one target polymer, the at least one non-target polymer and the at least one impurity at a temperature which is below the cloud point of the at least one non-target polymer in said solvent or the mixture of solvents and above the cloud point of the at least one target polymer in said solvent or the mixture of solvents;
g) optionally, adding at least one additive to the suspension comprising the at least one target polymer obtained in step f, wherein said the at least one additive is essentially non-soluble in the at least one solvent or mixture of solvents;
h) separating the precipitate containing the at least one impurity, the at least one non-target polymer and optionally other non-soluble solid materials in a second liquid-solid separation step;
i) optionally, adding at least one additive or mixtures thereof to the solution comprising the target polymer obtained in step h and separating the at least one additive and adsorbed remaining impurities from said solution in a third liquid-solid separation step, wherein said the at least one additive is essentially non-soluble in the at least one solvent or mixture of solvents;
j) removing the residual solvent from the purified solution comprising the target polymer and,
k) optionally degassing the purified target polymer material.

2. The method according to claim 1, wherein said polymer material comprises the at least one target polymer in an amount of at least 55 wt%, preferably at least 65 wt%, more preferably at least 75 wt%, most preferred at least 85 wt%.

3. The method according to claim 1 or 2, wherein said polymer material comprises the at least one non-target polymer in an amount of at most 45 wt%, preferably at most 35 wt%, more preferably at most 25 wt%, most preferred at most 15 wt%.

4. The method according to any of claims 1 to 3, wherein the cloud point of the at least one non-target polymer in said solvent or the mixture of solvents is at least 2 K higher, preferably at least 5 K higher, more preferably at least 10 K higher, even more preferably at least 15 K higher than that cloud point of the at least one target polymer in said solvent or mixture of solvents.

5. The method according to any of claims 1 to 4, wherein said the at least one impurity is selected from the group comprising coloring agents such as pigments or dyes, bonding agents, thermostabilizers, UV-stabilizers, acid scavengers, fillers, light stabilizers, flame retardants, antistatic agents, lubricants, slip agents, biocides or mixtures thereof.

6. The method according to claim 5, wherein the pigments are selected from the group comprising TiO₂, carbon black/soot, colored inorganic pigments such as metal oxides, metal hydroxides and metal sulfides, azo pigments, mono-azo pigments, di-azo pigments, azo-lake pigments, polycyclic pigments, day glow fluorescent pigments and/or mixtures thereof, and the dyes are selected from carbonyl dyes, cyanine dyes, phthalocyanines, di-oxazines, and/or a mixture thereof.

7. The method according to any of claims 1 to 6, wherein the at least one target polymer is selected from the group comprising polyethylene terephthalate (PET), polystyrene (PS), expanded polystyrene (EPS), ethylene-vinyl-alcohol (EVOH), styrene acrylonitrile resin (SAN), acrylonitrile styrene acrylate (ASA), polyoxymethylene (POM), polybutylene terephthalate (PBT), polypropylene (PP), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polyamide (PA) such as PA6, PA6.10, PA6.12, PA6.66, PA 69, PA612, PA 11, PA12, PA46, PA1212 or lactams, polycarbonate (PCa) and acrylonitrile butadiene styrene (ABS) and/or a mixture thereof.

8. The method according to any of claims 1 to 7, wherein the at least one non-target polymer is selected from the group comprising polyethylene terephthalate (PET), polystyrene (PS), expanded polystyrene (EPS), ethylene-vinyl-alcohol (EVOH) styrene acrylonitrile resin (SAN), acrylonitrile styrene acrylate (ASA), polyoxymethylene (POM), polybutylene terephthalate (PBT), polypropylene (PP), polyethylene (PE) such as linear low-density polyethylene (LLDPE), medium-density polyethylene (MDPE), high-density polyethylene (HDPE), ultra-high molecular weight polyethylene (UHMWPE), biologically derived PE or PP, poly-1-butene (PB), polyvinyl chloride (PVC), polyamide (PA) such as PA6, PA6.10, PA6.12, PA6.66, PA 69, PA612, PA 11, PA12, PA46, PA1212 or lactams, polycarbonate (PCa) and acrylonitrile butadiene styrene (ABS) and/or a mixture thereof.

9. The method according to any of claims 1 to 8, wherein the at least one target polymer is selected from the group comprising polyethylene (PE), polypropylene (PP), polyethylene terephthalate (PET), polystyrene (PS), ethylene-vinyl-alcohol (EVOH), polybutylene terephthalate (PBT) and said at least one non-target polymer is high-density polyethylene (HDPE).

10. Method according to any of claims 1 to 9, wherein the average temperature of the solvent or a mixture of solvents in step c is in the range of from 50 to 160 °C, preferably from 70 to 160 °C, even more preferably from 70 to 140 °C, even more preferably from 80 to 120 °C, even more preferably from 90 to 115 °C, most preferred from 100 to 110 °C.

11. The method according to any of claims 1 to 10, wherein the amount of the at least one additive in steps e, g and i is between 0.1 to 30 wt%, preferably between 2.5 to 20 wt%, more preferably between 5 to 15 wt%, most preferably 7.5 to 12.5 wt% with regard to the at least one target polymer.

12. The method according to any of claims 1 to 11, wherein said additive in steps e, g and i has an inner specific surface area in the range from 120 to 2000 m²/g, preferably from 150 to 1500 m²/g, more preferably from 200 to 1500 m²/g, even more preferably from 250 to 1500 m²/g, most preferred from 250 to 1000 m²/g.

13. The method according to any of claims 1 to 12, wherein said additive in steps e, g and i- is selected from the group comprising bleaching earths, fuller's earth, molecular sieves, zeolites, celite, perlites, quartz sand, activated carbon, silica gel, calcium sulfate hemihydrate, thermostabilizers or mixtures thereof.

14. The recyclate which is obtainable by the method according to any of claims 1 to 13.

15. The recyclate comprising the target polymer, wherein said recyclate is **characterized by**:
the grade of decolorization which is **characterized by** a yellowness index of less than 5 and a luminance value of more than 85, and
a residual ash content of less than 0.5 wt%, preferably less than 0.1 wt%.
